# EUROPÄISCHE PATENTSCHRIFT

(11) **EP 3 523 006 B1**
(45) Veröffentlichungstag und Bekanntmachung des Hinweises auf die Patenterteilung: **23.09.2020**
(21) Anmeldenummer: 17755126.4
(22) Anmeldetag: 11.08.2017
(51) Int. Cl.: B01D 33/21, B01D 33/23

(54) **FILTERELEMENT**
FILTER ELEMENT
ÉLÉMENT FILTRE

(30) Priorität: 05.10.2016 DE 102016219235
(43) Veröffentlichungstag der Anmeldung: 14.08.2019
(73) Patentinhaber: Voith Patent GmbH, 89522 Heidenheim (DE)
(72) Erfinder: NIGGL, Volker, 88250 Weingarten (DE); RENZULLI, Marcella, 88212 Ravensburg (DE); GOMMEL, Axel, 88214 Ravensburg (DE); GOTTSCHALK, Gert, 88212 Ravensburg (DE)
(74) Vertreter: Voith Patent GmbH - Patentabteilung
(86) Internationale Anmeldenummer: PCT/EP2017/070454
(87) Internationale Veröffentlichungsnummer: WO 2018/065145

(56) Entgegenhaltungen:
- EP-A2- 0 544 636
- DE-A1- 2 503 656
- DE-A1- 19 531 614
- SU-A1- 946 600

## Beschreibung

Die Erfindung betrifft ein Filterelement eines rotierenden Scheibenfilters zur Abtrennung von Flüssigkeiten aus einer Suspension, insbesondere einer Faserstoffsuspension, dessen von einem oder mehreren, perforierten und profilierten Filterplatten begrenzter Innenraum mit einer Unterdruckquelle in Verbindung steht.

Derartige Scheibenfilter werden zur Eindickung der Suspension und in der Papierindustrie insbesondere zur Faserstoffrückgewinnung eingesetzt.

Auf den Filterscheiben bildet sich infolge des Druckunterschieds zwischen der Faserstoffsuspension und dem Innenraum der Filterscheiben eine Vliesschicht. Beim Eintauchen der Filterscheiben in die Faserstoffsuspension gelangt so weitestgehend nur Wasser in den Innenraum der Filterscheiben.

Die Vliesschicht wird beim Auftauchen über Schaber entfernt und zum entsprechenden Stoffauslauf geführt oder mit Wasser in den Stoffauslauf gespritzt.

Dabei werden die Filterelemente meist von zwei gegenüberliegenden wellenförmigen Filterplatten, wie in der DE 195 31 614 A1 beschrieben, gebildet.

Darüber hinaus sind Erhebungen auf den Filterplatten beispielsweise aus der DE 25 03 656 A1, der EP 0 544 636 A2 sowie der SU 946 600 A1 bekannt.

Die Aufgabe der Erfindung ist es die Effizienz der Filterelemente zu steigern.

Erfindungsgemäß wurde die Aufgabe dadurch gelöst, dass die vom Innenraum wegweisende Außenseite der Filterplatten eine Vielzahl von Erhebungen aufweist, deren parallel zur Filterplatte verlaufender Querschnitt rund oder länglich, insbesondere elliptisch- ist.

Über diese Erhebungen kann die Oberfläche der Filterplatten wesentlich vergrößert werden, was sich entsprechend auf die Entwässerungskapazität des Filterelementes auswirkt. Daher befinden sich die Erhebungen mit Vorteil ausschließlich im perforierten Bereich der jeweiligen Filterplatte.

Alternativ oder ergänzend kann die Entwässerungsleistung noch dadurch spezifisch beeinflusst werden, indem zumindest eine Filterplatte auf der vom Innenraum wegweisenden Außenseite eine Vielzahl von Erhebungen unterschiedlicher Form und/oder Größe, insbesondere hinsichtlich des parallel zur Filterplatte verlaufenden Querschnitts aufweist.

Diese Filterplatten lassen sich dabei mittels Zugdruckumformen eines Blechs, auch Tiefziehen genannt, problemlos und kostengünstig herstellen.

Die Höhe der Erhebungen sollte hierbei unabhängig von der Ausführungsform zwischen 2 und 20 mm, vorzugsweise zwischen 4 und 12 mm liegen.

So kann es für das leichte Entfernen der Vliesschicht von Vorteil sein, wenn wenigstens eine, vorzugsweise zwei gegenüberliegende Filterplatten des Filterelementes im Wesentlichen eben sind und das Profil ausschließlich von den Erhebungen gebildet wird.

Andererseits ergibt sich eine sehr große Filteroberfläche, wenn wenigstens eine, vorzugsweise zwei gegenüberliegende Filterplatten des Filterelementes einen wellenförmigen Querschnitt mit Erhebungen zumindest auf den Wellenbergen der Außenseite haben.

Falls die Wellenberge nicht linear verlaufen, so kann damit die Filteroberfläche noch weiter vergrößert werden.

Auf der anderen Seite erleichtert ein linearer Verlauf der Wellenberge die Bildung von Strömungskanälen im Innenraum des Filterelementes in Richtung Unterdruckquelle.

Über eine Variation des Verlaufs des Wellenprofils einer Filterplatte insbesondere hinsichtlich Frequenz und Amplitude der Welle kann die Entwässerungskapazität der Filterplatte spezifisch beeinflusst werden.

Im Interesse einer hohen Stabilität des Filterelementes ist es vorteilhaft, wenn die Wellen zweier gegenüberliegender Filterplatten des Filterelementes zueinander geneigt verlaufen.

Jedoch gestaltet sich die Bildung von Strömungskanälen im Innenraum des Filterelementes zur Unterdruckquelle hin einfacher, wenn die Wellen zweier gegenüberliegender Filterplatten des Filterelementes parallel zueinander verlaufen.

Dabei ergeben sich mehrere große Strömungskanäle, wenn die Wellenberge der Außenseite einer Filterplatte jeweils den Wellenbergen der Außenseite der anderen Filterplatte des Filterelementes gegenüberliegen.

Nur ein Strömungskanal ergibt sich, wenn die Wellenberge der Außenseite einer Filterplatte jeweils den Wellentälern der Außenseite der anderen Filterplatte des Filterelementes gegenüberliegen.

Für die Anwendung in Scheibenfiltern zur Behandlung von Faserstoffsuspensionen sollte das Filterelement kreissektorförmig ausgebildet und vorzugsweise auf einer, mit der Unterdruckquelle verbundenen Hohlwelle befestigt sein. Dabei bilden mehrere Filterelemente die kreisförmige Filterscheibe.

Zur Realisierung einer sicheren und einfachen Verbindung zwischen der Hohlwelle bzw. einem Kanal in der Hohlwelle und dem Innenraum der daran befestigten Filterelemente sollte die Hohlwelle an der Außenfläche mehrere Öffnungen besitzen, wobei vorzugsweise jedem Filterelement eine separate Öffnung zugeordnet ist.

Um den Abfluss des Filtrats zu erleichtern, sollte der Innenraum mehrere in Richtung der Unterdruckquelle, d.h. der Hohlwelle führende Strömungskanäle besitzen, bei denen sich der minimale Abstand zwischen zwei gegenüberliegenden Filterplatten des Filterelementes in Richtung der Unterdruckquelle vergrößert.

Aus gleichem Grund ist es vorteilhaft, wenn die Filterplatten in dem zur Hohlwelle führenden Endbereich keine Perforation aufweisen.

Besonders einfach gestaltet sich die Herstellung der Filterelemente, wenn zwei den Innenraum des Filterelementes begrenzende Filterplatten an den Enden formschlüssig miteinander verbunden werden.

Nachfolgend soll die Erfindung an mehreren Ausführungsbeispielen näher erläutert werden.

In der beigefügten Zeichnung zeigt:
Figur 1: eine Seitenansicht eines Scheibenfilters;
Figur 2: eine Draufsicht auf eine Filterplatte 3;
Figur 3: eine längliche Erhebung 4;
Figur 4: zwei gewellte Filterplatten 3 eines Filterelementes 1 mit geneigten Wellen;
Figur 5: zwei gewellte Filterplatten 3 eines Filterelementes 1 mit parallelen Wellen;
Figur 6: einen Teilquerschnitt durch ein Filterelement 1 gemäß Figur 5;
Figur 7 und 8: eine Filterplatte 3 mit runden Erhebungen 4;
Figur 9: eine Filterplatte 3 mit unterschiedlichen Wellen;
Figur 10: eine Filterplatte 3 mit nicht linear verlaufenden Wellen und
Figur 11: eine Filterplatte mit unterschiedlich großen Erhebungen 4.

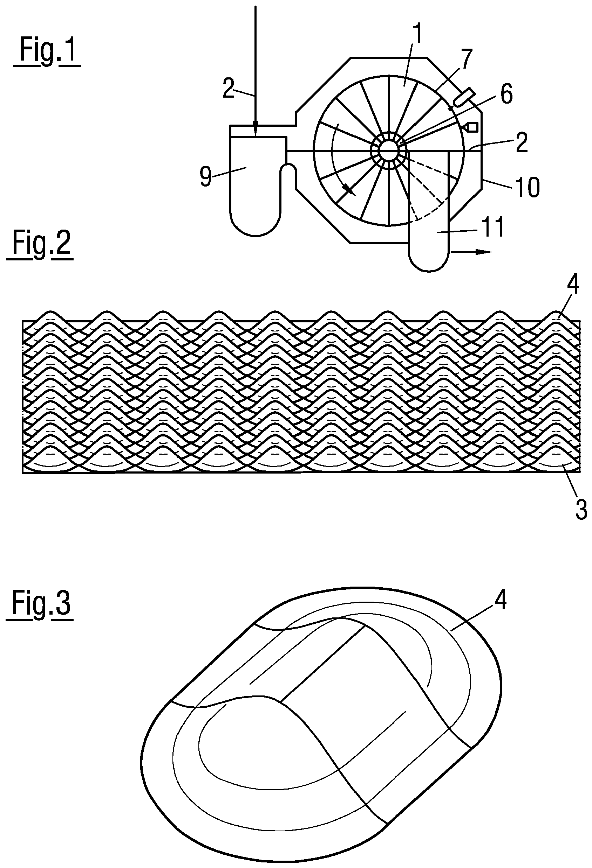

Die Faserstoffsuspension 2 wird gemäß Figur 1 über einen Einlauf 9 in den Behälter 10 des Scheibenfilters geleitet. Im Behälter 10 befindet sich eine horizontal verlaufende und rotierbar gelagerte Hohlwelle 6 mit mehreren senkrechten und axial voneinander beabstandeten Filterscheiben 7.

Die Filterscheiben 7 werden jeweils von mehreren kreisringsektorförmigen Filterelementen 1 gebildet, die über je einen Sektorfuß 12 mit der Hohlwelle 6 verbunden sind.

Zur Senkung des Herstellungsaufwandes besteht die Hohlwelle 6 aus mehreren, sich in axialer Richtung erstreckenden und in Umfangsrichtung nebeneinander angeordneten Modulen.

Die Filterelemente 1 besitzen einen Innenraum 5, der über eine separate Öffnung der Hohlwelle 6 mit einem Kanal in derselben zur Fluidführung in Verbindung steht. Der Innenraum 5 der Filterelemente 1 wird von zwei perforierten und axial voneinander beabstandeten Filterplatten 3 begrenzt.

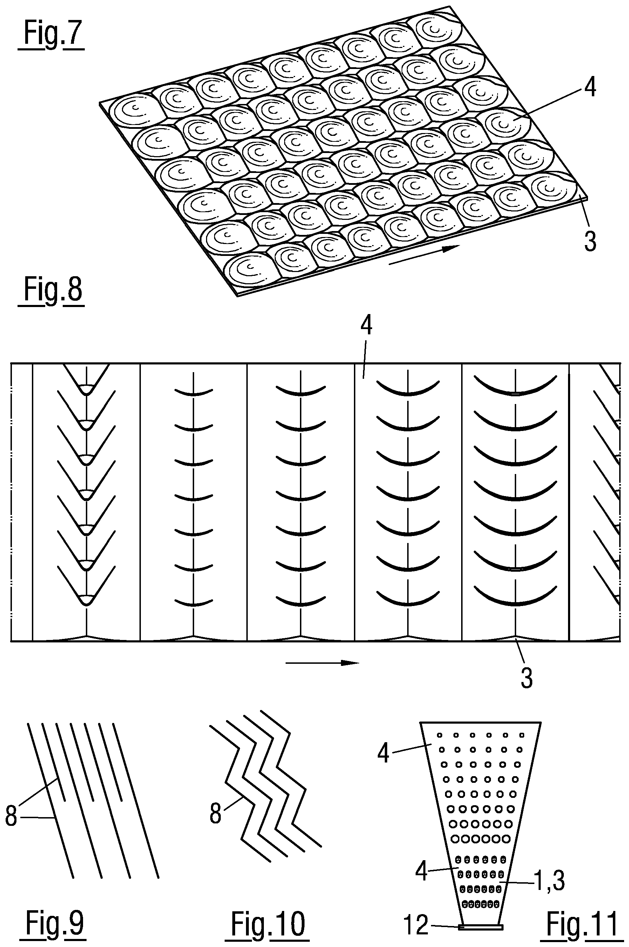

Dabei weisen die Filterplatten 3 entsprechend Figur 11 in dem zur Hohlwelle 6 führenden Endbereich mit dem Sektorfuß 12 keine Perforation auf.

Um das Wasser aus der Suspension 2 abziehen zu können, steht die mit einer Unterdruckquelle verbundene Hohlwelle 6 mit dem Innenraum 5 der Filterelemente 1 in Verbindung.

Die sich dabei an der Außenseite der Filterelemente 1 bildende Vliesschicht wird nach dem Auftauchen aus der Suspension 2 in den Stoffauslauf 11 befördert.

Zwecks Vergrößerung der wirksamen Filteroberfläche weisen die Filterplatten 3, wie in den Figuren 2-5,7,8 und 11 zu erkennen, auf der vom Innenraum 5 wegweisenden Außenseite der Filterplatten 3 eine Vielzahl von Erhebungen 4 mit rundem oder länglichem, insbesondere etwa elliptischem und parallel zur Filterplatte verlaufendem Querschnitt auf.

Da die Filterplatten 3 in der Regel von einem, vorzugsweise tiefgezogenen Blech gebildet werden, bilden die Erhebungen 4 gleichzeitig auch eine Erweiterung des Innenraums 5.

Dabei ist es besonders vorteilhaft, die Filterplatten 3 mit dem Sektorfuß 12 einstückig auszuführen und/oder die beiden, den Innenraum 5 des Filterelementes 1 begrenzenden Filterplatten 3 am Außenumfang formschlüssig, beispielsweise mittels Falzen oder Clinchen miteinander zu verbunden.

Damit die Erhebungen 4 wirksam werden können, befinden sich diese ausschließlich im perforierten Bereich der Filterplatten 3. Die runde Außenkontur der Erhebungen 4 verhindert dabei einen zu großen Abrieb derselben im Betrieb.

Um die Erhebungen 4 besser an die spezifischen Gegebenheiten des Filterelementes 1 anpassen zu können, kann es ebenso vorteilhaft sein, auf der Außenseite eine Vielzahl von Erhebungen 4 unterschiedlicher Form und/oder Größe vorzusehen. Hierzu zeigt Figur 11 eine Ausführung, bei der kreisrunde Erhebungen 4 unterschiedlichen Durchmessers sowie längliche Erhebungen 4 auf einer Filterplatte 3 zu finden sind.

Da die Erhebungen 4 oft bereits für eine ausreichend große Filteroberfläche sorgen, können, wie in den Figuren 2,7,8 und 11 dargestellt, eine oder vorzugsweise beide gegenüberliegenden Filterplatten 3 des Filterelementes 1 im Wesentlichen eben sein.

Über einen sich in Richtung Hohlwelle 6 allmählich vergrößernden Abstand zwischen den gegenüberliegenden Filterplatten 3 kann der Innenraum 5 im Bereich der Hohlwelle 6 problemlos vergrößert und so der Abfluss des Filtrats in Richtung Hohlwelle 6 erleichtert werden.

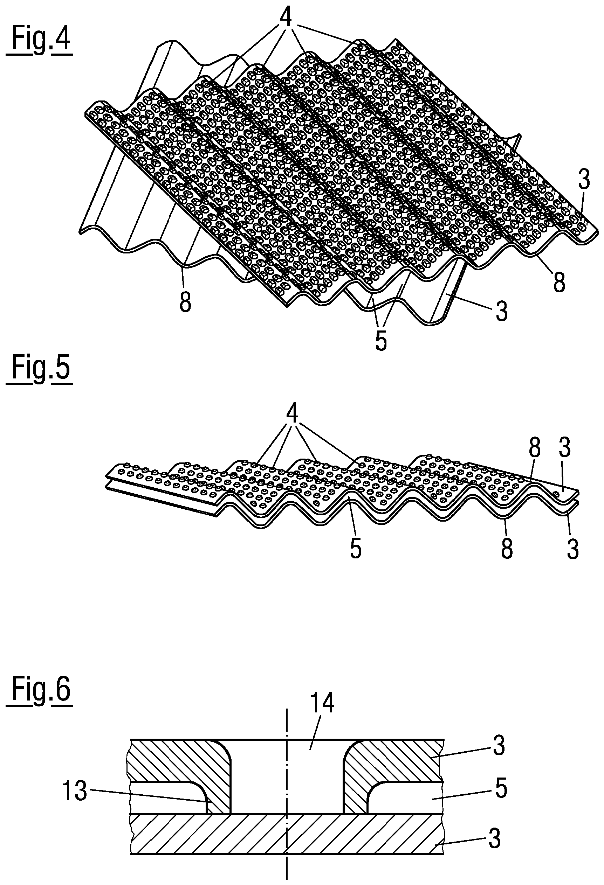

Zwecks Schaffung einer sehr großen Filteroberfläche können aber auch wenigstens eine, vorzugsweise beide gegenüberliegenden Filterplatten 3 des Filterelementes 1 einen wellenförmigen Querschnitt mit Erhebungen 4 zumindest auf den Wellenbergen 8 der Außenseite haben. Diese Ausführungsform ist in den Figuren 4 und 5 offenbart.

Figur 4 zeigt hierzu ein Beispiel, bei dem die linear verlaufenden Wellenberge 8 beider gegenüberliegender Filterplatten 3 des Filterelements 1 in der Ebene der Filterscheibe 7 zueinander geneigt sind.

Im Gegensatz dazu verlaufen die sich ebenfalls linear ersteckenden Wellenberge 8 beider gegenüberliegender Filterplatten 3 des Filterelements 1 bei Figur 5 parallel zueinander.

Dabei ist es möglich, dass die Wellenberge 8 der Außenseite einer Filterplatte 3 jeweils den Wellenbergen 8 der Außenseite der anderen Filterplatte 3 des Filterelementes 1 gegenüberliegen und so je einen Strömungskanal zwischen den jeweils gegenüberliegenden Wellenbergen 8 bilden.

Figur 5 zeigt jedoch eine alternative Ausführung, bei der die Wellenberge 8 der Außenseite einer Filterplatte 3 jeweils den Wellentälern der Außenseite der anderen Filterplatte 3 des Filterelementes 1 gegenüberliegen. Hierdurch entsteht ein im Wesentlichen gleichbreiter Innenraum 5 zwischen den Filterplatten 3.

Zur Stabilisierung des Innenraums 5 können dabei Abstandhalter 13 zwischen den gegenüberliegenden Filterplatten 3 von Vorteil sein. Leicht realisieren lassen sich diese Abstandhalter 13 beispielsweise wie in Figur 6 in Form von, in den Innenraum 5 hineinragenden Kragen der Perforation 14 der Filterplatte 3.

Bei Figur 9 variiert die Gestaltung der linear verlaufenden Wellen einer Filterplatte 3 derart, dass die Anzahl der Wellen in Richtung der Hohlwelle 6 hin in Stufen abnimmt.

Zur weiteren Vergrößerung der Filteroberfläche können die Wellenberge 8 gemäß Figur 10 aber auch nicht linear verlaufen.

Die Erhebungen 4 der Filterplatten 3 können wie in Figur 2 voneinander separat angeordnet sein oder aber wie in Figur 7 und 8 vorzugsweise in Richtung Hohlwelle 6 ineinander übergehen.

Bei der in Figur 8 gezeigten Ausführung werden die Abschnitte zwischen den Erhebungen 4 in Richtung Hohlwelle 6 allmählich höher, was dazu führt, dass der Innenraum 5 mehrere in Richtung der Unterdruckquelle führende Strömungskanäle besitzt, bei denen sich der minimale Abstand zwischen zwei gegenüberliegenden Filterplatten 3 des Filterelementes 1 in Richtung der Unterdruckquelle allmählich vergrößert.

## Patentansprüche

1. Filterelement (1) eines rotierenden Scheibenfilters zur Abtrennung von Flüssigkeiten aus einer Suspension (2), insbesondere einer Faserstoffsuspension, dessen von einem oder mehreren, perforierten und profilierten Filterplatten (3) begrenzter Innenraum (5) mit einer Unterdruckquelle in Verbindung steht, wobei die vom Innenraum (5) wegweisende Außenseite der Filterplatten (3) eine Vielzahl von Erhebungen (4) mit rundem oder länglichem Querschnitt aufweist, **dadurch gekennzeichnet, dass** wenigstens eine der Filterplatten (3) des Filterelementes (1) einen wellenförmigen Querschnitt mit Erhebungen (4) auf den Wellenbergen (8) der Außenseite hat.

2. Filterelement (1) eines rotierenden Scheibenfilters zur Abtrennung von Flüssigkeiten aus einer Suspension (2), insbesondere einer Faserstoffsuspension, dessen von einem oder mehreren, perforierten und profilierten Filterplatten (3) begrenzter Innenraum (5) mit einer Unterdruckquelle in Verbindung steht, insbesondere nach Anspruch 1, wobei zumindest eine Filterplatte (3) auf der vom Innenraum (5) wegweisenden Außenseite eine Vielzahl von Erhebungen (4) unterschiedlicher Form und/oder Größe aufweist, **dadurch gekennzeichnet, dass** wenigstens eine der Filterplatten (3) des Filterelementes (1) einen wellenförmigen Querschnitt mit Erhebungen (4) auf den Wellenbergen (8) der Außenseite hat.

3. Filterelement (1) nach Anspruch 1 oder 2, **dadurch gekennzeichnet, dass** eine Filterplatte (3) des Filterelementes (1) eben ist.

4. Filterelement (1) nach Anspruch 1 oder 2, **dadurch gekennzeichnet, dass** zwei gegenüberliegende Filterplatten (3) des Filterelementes (1) einen wellenförmigen Querschnitt mit Erhebungen (4) auf den Wellenbergen (8) der Außenseite haben.

5. Filterelement (1) nach einem der vorhergehenden Ansprüche, **dadurch gekennzeichnet, dass** die Wellenberge (8) nicht linear verlaufen.

6. Filterelement (1) nach einem der Ansprüche 1 bis 4, **dadurch gekennzeichnet, dass** die Wellenberge (8) linear verlaufen.

7. Filterelement (1) nach einem der vorhergehenden Ansprüche, **dadurch gekennzeichnet, dass** der Verlauf des Wellenprofils einer Filterplatte (3) abschnittsweise variiert.

8. Filterelement nach einem der Ansprüche 4 bis 7, **dadurch gekennzeichnet, dass** die Wellen zweier gegenüberliegender Filterplatten (3) des Filterelementes (1) zueinander geneigt verlaufen.

9. Filterelement (1) nach einem der Ansprüche 4 bis 7, **dadurch gekennzeichnet, dass** die Wellen zweier gegenüberliegender Filterplatten (3) des Filterelementes (1) parallel zueinander verlaufen.

10. Filterelement (1) nach Anspruch 9, **dadurch gekennzeichnet, dass** die Wellenberge (8) der Außenseite einer Filterplatte (3) jeweils den Wellenbergen (8) der Außenseite der anderen Filterplatte (3) des Filterelementes (1) gegenüberliegen.

11. Filterelement (1) nach Anspruch 9, **dadurch gekennzeichnet, dass** die Wellenberge (8) der Außenseite einer Filterplatte (3) jeweils den Wellentälern der Außenseite der anderen Filterplatte (3) des Filterelementes (1) gegenüberliegen.

12. Filterelement (1) nach einem der vorhergehenden Ansprüche, **dadurch gekennzeichnet, dass** der Innenraum (5) mehrere in Richtung der Unterdruckquelle führende Strömungskanäle besitzt, bei denen sich der minimale Abstand zwischen zwei gegenüberliegenden Filterplatten (3) des Filterelementes (1) in Richtung der Unterdruckquelle vergrößert.

13. Filterelement (1) nach einem der vorhergehenden Ansprüche, **dadurch gekennzeichnet, dass** dieses kreissektorförmig ausgebildet und vorzugsweise auf einer, mit der Unterdruckquelle verbundenen Hohlwelle (6) befestigbar ist.

14. Filterelement (1) nach Anspruch 13, **dadurch gekennzeichnet, dass** durch mehrere
Filterelemente (1) eine kreisförmige Filterscheibe (7) bildbar ist.

15. Filterelement (1) nach Anspruch 13 oder 14, **dadurch gekennzeichnet, dass** die
Filterplatten (3) in dem zur Hohlwelle (6) führenden Endbereich keine Perforation aufweisen.

16. Filterelement (1) nach einem der vorhergehenden Ansprüche, **dadurch gekennzeichnet, dass** zwei den Innenraum (5) des Filterelementes (1) begrenzende Filterplatten (3) an den Enden formschlüssig miteinander verbunden sind.

17. Filterelement (1) nach einem der vorhergehenden Ansprüche, **dadurch gekennzeichnet, dass** sich die Erhebungen (4) ausschließlich im perforierten Bereich der Filterplatte (3) befinden.

## Claims

1. Filter element (1) of a rotating disc filter for separating liquids from a suspension (2), in particular a fibrous material suspension, the interior (5) of which filter element, delimited by one or more perforated and profiled filter plates (3), is connected to a vacuum source, wherein the outer side of the filter plates (3), facing away from the interior (5), has a multiplicity of elevations (4) with a round or elongated cross section, **characterized in that** at least one of the filter plates (3) of the filter element (1) has an undulating cross section with elevations (4) on the wave crests (8) of the outer side.

2. Filter element (1) of a rotating disc filter for separating liquids from a suspension (2), in particular a fibrous material suspension, the interior (5) of which filter element, delimited by one or more perforated and profiled filter plates (3), is connected to a vacuum source, in particular according to Claim 1, wherein at least one filter plate (3) has a multiplicity of elevations (4) of different shape and/or size on the outer side pointing away from the interior (5), **characterized in that** at least one of the filter plates (3) of the filter element (1) has an undulating cross section with elevations (4) on the wave crests (8) of the outer side.

3. Filter element (1) according to Claim 1 or 2, **characterized in that** one filter plate (3) of the filter element (1) is flat.

4. Filter element (1) according to Claim 1 or 2, **characterized in that** two opposite filter plates (3) of the filter element (1) have an undulating cross section with elevations (4) on the wave crests (8) of the outer side.

5. Filter element (1) according to one of the preceding claims, **characterized in that** the wave crests (8) do not run linearly.

6. Filter element (1) according to one of Claims 1 to 4, **characterized in that** the wave crests (8) run linearly.

7. Filter element (1) according to one of the preceding claims, **characterized in that** the course of the wave profile of a filter plate (3) varies section by section.

8. Filter element according to one of Claims 4 to 7, **characterized in that** the waves of two opposite filter plates (3) of the filter element (1) run at an angle to each other.

9. Filter element (1) according to one of Claims 4 to 7, **characterized in that** the waves of two opposite filter plates (3) of the filter element (1) run parallel to each other.

10. Filter element (1) according to Claim 9, **characterized in that** the wave crests (8) of the outer side of a filter plate (3) are each opposite the wave crests (8) of the outer side of the other filter plate (3) of the filter element (1).

11. Filter element (1) according to Claim 9, **characterized in that** the wave crests (8) of the outer side of a filter plate (3) are each opposite the wave troughs of the outer side of the other filter plate (3) of the filter element (1).

12. Filter element (1) according to one of the preceding claims, **characterized in that** the interior (5) has a plurality of flow channels leading in the direction of the vacuum source, in which channels the minimum distance between two opposite filter plates (3) of the filter element (1) increases in the direction of the vacuum source.

13. Filter element (1) according to one of the preceding claims, **characterized in that** this is formed in the shape of a sector of a circle and can preferably be fixed to a hollow shaft (6) connected to the vacuum source.

14. Filter element (1) according to Claim 13, **characterized in that** a circular filter disc (7) can be formed by a plurality of filter elements (1).

15. Filter element (1) according to Claim 13 or 14, **characterized in that** the filter plates (3) have no perforation in the end region leading to the hollow shaft (6).

16. Filter element (1) according to one of the preceding claims, **characterized in that** two filter plates (3) delimiting the interior (5) of the filter element (1) are connected to each other by a form fit at the ends.

17. Filter element (1) according to one of the preceding claims, **characterized in that** the elevations (4) are located exclusively in the perforated region of the filter plate (3).

## Revendications

1. Élément filtrant (1) d'un filtre à disque tournant pour séparer des liquides d'une suspension (2), en particulier d'une suspension de matière fibreuse, dont l'espace intérieur (5), limité par une ou plusieurs plaques de filtre (3) perforées et profilées, communique avec une source de dépression, la face extérieure, détournée de l'espace intérieur (5), des plaques de filtre (3) présentant une pluralité de bossages (4) de section transversale ronde ou allongée, **caractérisé en ce qu'**au moins l'une des plaques de filtre (3) de l'élément filtrant (1) présente une section transversale ondulée munie de bossages (4) sur les sommets d'onde (8) de la face extérieure.

2. Élément filtrant (1) d'un filtre à disque tournant pour séparer des liquides d'une suspension (2), en particulier d'une suspension de matière fibreuse, dont l'espace intérieur (5), limité par une ou plusieurs plaques de filtre (3) perforées et profilées, communique avec une source de dépression, en particulier selon la revendication 1, dans lequel au moins une plaque de filtre (3) présente sur la face extérieure détournée de l'espace intérieur (5) une pluralité de bossages (4) de différentes formes et/ou dimensions, **caractérisé en ce qu'**au moins l'une des plaques de filtre (3) de l'élément filtrant (1) présente une section transversale ondulée munie de bossages (4) sur les sommets d'onde (8) de la face extérieure.

3. Élément filtrant (1) selon la revendication 1 ou 2, **caractérisé en ce qu'**une plaque de filtre (3) de l'élément filtrant (1) est plane.

4. Élément filtrant (1) selon la revendication 1 ou 2, **caractérisé en ce que** deux plaques de filtre opposées (3) de l'élément filtrant (1) présentent une section transversale ondulées munie de bossages (4) sur les sommets d'onde (8) de la face extérieure.

5. Élément filtrant (1) selon l'une quelconque des revendications précédentes, **caractérisé en ce que** les sommets d'onde (8) s'étendent de manière non linéaire.

6. Élément filtrant (1) selon l'une quelconque des revendications 1 à 4, **caractérisé en ce que** les sommets d'onde (8) s'étendent de manière linéaire.

7. Élément filtrant (1) selon l'une quelconque des revendications précédentes, **caractérisé en ce que** l'allure du profil ondulé d'une plaque de filtre (3) varie par endroits.

8. Élément filtrant selon l'une quelconque des revendications 4 à 7, **caractérisé en ce que** les ondes de deux plaques de filtre opposées (3) de l'élément de filtre (1) s'étendent en étant inclinées l'une par rapport à l'autre.

9. Élément filtrant (1) selon l'une quelconque des revendications 4 à 7, **caractérisé en ce que** les ondes de deux plaques de filtre opposées (3) de l'élément de filtre (1) s'étendent en parallèle.

10. Élément filtrant (1) selon la revendication 9, **caractérisé en ce que** les sommets d'onde (8) de la face extérieure d'une plaque de filtre (3) sont opposés respectivement aux sommets d'onde (8) de la face extérieure de l'autre plaque de filtre (3) de l'élément filtrant (1).

11. Élément filtrant (1) selon la revendication 9, **caractérisé en ce que** les sommets d'onde (8) de la face extérieure d'une plaque de filtre (3) sont opposés respectivement aux creux d'onde de la face extérieure de l'autre plaque de filtre (3) de l'élément filtrant (1).

12. Élément filtrant (1) selon l'une quelconque des revendications précédentes, **caractérisé en ce que** l'espace intérieur (5) dispose de plusieurs canaux d'écoulement allant en direction de la source de dépression sur lesquels la distance minimale entre deux plaques de filtre (3) opposées de l'élément filtrant (1) augmente en direction de la source de dépression.

13. Élément filtrant (1) selon l'une quelconque des revendications précédentes, **caractérisé en ce que** celui-ci est réalisé en forme de secteur de cercle et peut de préférence être fixé sur un arbre creux (6) relié à la source de dépression.

14. Élément filtrant (1) selon la revendication 13, **caractérisé en ce que** plusieurs éléments filtrants (1) permettent de former un disque de filtre circulaire (7).

15. Élément filtrant (1) selon la revendication 13 ou 14, **caractérisé en ce que** les plaques de filtre (3) ne présentent aucune perforation dans la zone d'extrémité menant à l'arbre creux (6).

16. Élément filtrant (1) selon l'une quelconque des revendications précédentes, **caractérisé en ce que** deux plaques de filtre (3) limitant l'espace intérieur (5) de l'élément filtrant (1) sont reliées ensemble aux extrémités par complémentarité de forme.

17. Élément filtrant (1) selon l'une quelconque des revendications précédentes, **caractérisé en ce que** les bossages (4) se trouvent exclusivement dans la zone perforée de la plaque de filtre (3).
